(19) Europäisches Patentamt
European Patent Office
Office européen des brevets

(11) Publication number: **0 463 431 A2**

(12) # EUROPEAN PATENT APPLICATION

(21) Application number: **91109320.1**

(51) Int. Cl.$^5$: **C08J 3/03**, //C08L83:04

(22) Date of filing: **06.06.91**

(30) Priority: **07.06.90 US 534827**

(43) Date of publication of application: **02.01.92 Bulletin 92/01**

(84) Designated Contracting States: **DE FR GB**

(71) Applicant: **DOW CORNING CORPORATION**
**P.O. Box 1767**
**Midland Michigan 48686-0994(US)**

(72) Inventor: **Gee, Ronald Paul**
**6109 Sturgeon Creek Parkway**
**Midland, Michigan(US)**
Inventor: **Krzysik, Duane G.**
**5517 Woodview Pass**
**Midland, Michigan(US)**
Inventor: **Lake, Norman Eugene**
**2162 Dublin Road**
**Midland, Michigan(US)**

(74) Representative: **Spott, Gottfried, Dr. et al**
**Spott Weinmiller & Partner**
**Sendlinger-Tor-Platz 11**
**W-8000 München 2(DE)**

(54) **Process for making polysiloxane emulsions.**

(57) Disclosed is a method for producing emulsions from high viscosity polysiloxanes, bi-modal polysiloxane fluids, functional polysiloxanes and mixtures thereof. The method comprises forming a thick phase emulsion by blending a polysiloxane, at least one primary surfactant and water. To the blend, at least one secondary surfactant is added. The mixture is then mixed using shear for a sufficient period of time until an average particle size of less than 350 nanometers is achieved. The thick phase emulsion is then diluted with additional water to the desired silicone content to form the final emulsion.

EP 0 463 431 A2

This invention pertains to a process for making polysiloxane emulsions. This method is particularly useful for making emulsions from high viscosity polysiloxanes. The emulsions are produced using mechanical means.

There are numerous processes known in the art for producing polysiloxane emulsions. These processes are typically categorized as being a mechanical emulsification process or an emulsion polymerization process. Emulsion polymerization typically entails taking a polysiloxane monomer and/or oligomer and emulsifying it in water in the presence of at least one surfactant while simultaneously polymerizing the monomer and/or oligomer in the presence of a catalyst to form the polysiloxane polymer. Emulsion polymerization processes have the capability to produce emulsions of high viscosity polysiloxanes, however they can contain up to 20% or more of unreacted monomer or oligomer. This presence of monomer or oligomer may be undesired in some applications using the emulsion.

Mechanical emulsification processes typically entail taking a polysiloxane polymer and emulsifying it in water in the presence of at least one surfactant using mechanical means such as agitation, shaking and homogenization, to achieve the emulsification. The ability to emulsify high viscosity polysiloxane polymers is limited when using mechanical emulsification processes.

There is a need for a reliable process which produces emulsions from high viscosity polysiloxane polymers using mechanical means. In particular, there is a need for a mechanical emulsification process for producing emulsions from polysiloxane polymers with a viscosity of greater than 1,000 centistoke and preferably greater than 10,000 centistoke.

It is an object of this invention to provide a mechanical method for producing oil-in-water emulsions from polysiloxanes having a viscosity of greater than 1,000 centistoke.

It is further an object of this invention to provide a method for producing oil-in-water emulsions from mixtures of polysiloxanes comprising at least one low viscosity (less than 1000 centistoke) polysiloxane and at least one high viscosity (greater than 1,000 centistoke), non-volatile polysiloxane.

It is further an object of this invention to provide a method for producing oil-in-water emulsions from functional polysiloxanes.

It is further an object of this invention to show that the emulsions produced by the method of this invention are stable and oil-free.

It is further an object of this invention to show a method for producing emulsions having an average particle size of less than 350 nanometers.

The instant invention relates to a method for producing oil-in-water emulsions from high viscosity polysiloxanes; mixtures of polysiloxanes (herein referred to as bi-modal polysiloxane fluids) comprising at least one low viscosity polysiloxane and at least one high viscosity, non-volatile polysiloxane; functional polysiloxanes and mixtures thereof. Although the instant invention is particularly useful for producing emulsions from high viscosity polysiloxanes, such limitations should not be placed on the instant invention as it has also been found useful in producing emulsions from bi-modal polysiloxane fluids which are comprised of at least one low viscosity polysiloxane and at least one high viscosity, non-volatile polysiloxane; and functional polysiloxanes such as amine functional polysiloxanes, carboxy functional polysiloxanes, haloalkyl functional polysiloxanes, glycol functional polysiloxanes and vinyl functional polysiloxanes.

The process of the instant invention is carried out by forming a thick phase emulsion by combining a polysiloxane; at least one primary surfactant selected from nonionic surfactants having an HLB value of 10 to 19 and water. It may first be necessary to combine the primary surfactant with sufficient water so that at the process temperature the surfactant is in a liquid state. After the primary surfactant and water have been dispersed into the polysiloxane, at least one secondary surfactant selected from nonionic surfactants having an HLB value of 1.8 to 15, cationic surfactants and anionic surfactants and mixtures thereof is added and dispersed into the polysiloxane. The resulting mixture is then sheared at a temperature between 20°C. and 100°C. and preferably between 40°C. and 100°C. for a sufficient period of time until the average particle size of thick phase emulsion is less than 350 nanometers (nm) and more preferably less than 300 nanometers. The resulting thick phase emulsion is then diluted to the desired silicone content to form the final emulsion.

The high viscosity polysiloxanes useful in the instant invention are selected from compounds having the formula

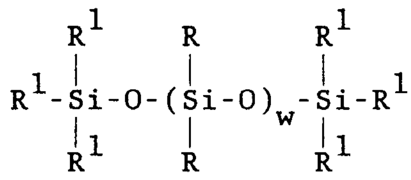

(I)

wherein each R is independently selected from the hydrogen atom, an alkyl group having at least 1 carbon atom and an aryl group having 6 to 10 carbon atoms; each $R^1$ is independently selected from R, hydroxy groups and alkoxy groups; and w has the value such that the viscosity is at least 1,000 centistoke and preferably at least 10,000 centistoke. R may be further exemplified by methyl, ethyl, phenyl, vinyl, the hydrogen atom and others. $R^1$ may be further exemplified by methyl, ethyl, vinyl, phenyl, -OH, methoxy, ethoxy, the hydrogen atom and others.

The bi-modal polysiloxane fluids useful in the instant invention are comprised of at least one low viscosity polysiloxane and at least one high viscosity, non-volatile polysiloxane. The low viscosity polysiloxane may be selected from linear and cyclic polysiloxanes which further may or may not be volatile. Further the low viscosity polysiloxanes are defined as those that have a viscosity of less than 1,000 centistoke and preferably less than 500 centistoke. The low viscosity, polysiloxane typically comprises 1 to 99% by weight of the bi-modal polysiloxane fluid composition.

The linear low viscosity polysiloxanes are selected from compounds having the formula

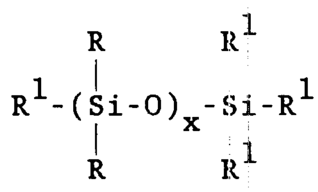

(II)

wherein R and $R^1$ are as described previously and x has the value of at least 1. It is preferred that R and $R^1$ be predominantly the methyl group.

The cyclic low viscosity polysiloxanes are selected from compounds having the general formula

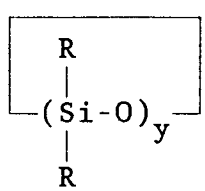

(III)

wherein R is as described above and y has the value of 3 to 7. It is preferred that R be predominantly the methyl group.

The high viscosity, non-volatile polysiloxane is selected from compounds having the formula described by (I). Preferred are those compounds described by formula (I) further having a viscosity of at least 10,000 centistoke and where R is predominantly methyl. The high viscosity, non-volatile polysiloxane typically comprises 1 to 99% by weight of the bi-modal polysiloxane fluid composition.

The functional polysiloxanes useful in the instant invention are selected from compounds having the formula

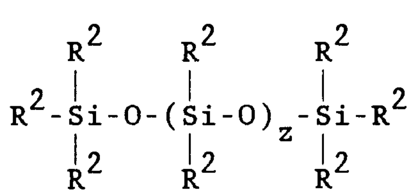

(IV)

wherein each $R^2$ is independently selected from $R^1$, aminoalkyl functional groups containing at least 1

carbon atom, carboxyalkyl functional groups containing at least 1 carbon atom, haloalkyl functional groups containing at least 1 carbon atom, acrylate functional groups, acryloxy functional groups, acrylamide functional groups, vinyl functional groups and other functional groups having the formula $F\text{-}R^3\text{-}$ where F is a functional group containing at least one atom which is not a carbon or hydrogen atom and $R^3$ is selected from an alkylene group having at least 1 carbon atom and an arylene group having 6 to 10 carbon atoms; and z has the value of at least 10. It is preferred that when $R^2$ is a group other than methyl that it comprise less than 50% of the total $R^2$ groups.

$R^2$ may be further exemplified by, but not limited to the following functional groups:

$ClCH_2CH_2CH_2$-,

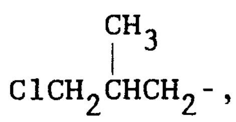

$H_2NCH_2CH_2NHCH_2CH_2CH_2$-,

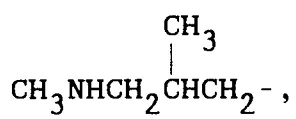

$F_3CCH_2CH_2$-,

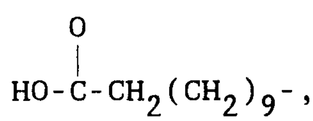

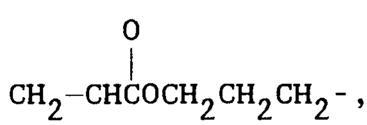

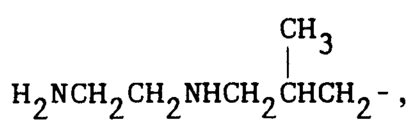

$HO(CH_2CH_2O)_{1\text{-}25}CH_2CH_2CH_2$-,
$HO(CH_2CH_2O)_{1\text{-}25}(CH_2CH_2CH_2O)_{1\text{-}25}CH_2CH_2CH_2$-,

and other functional groups having the formula $F\text{-}R^3\text{-}$ where F is a functional group containing at least one atom which is not a carbon or hydrogen atom and $R^3$ is selected from an alkylene group having at least 1 carbon atom and an arylene group having 6 to 10 carbon atoms.

The primary surfactant is selected from nonionic surfactants having an HLB value of 10 to 19. Nonionic surfactants known in the art as being useful in emulsification of polysiloxanes are useful in the instant invention. Useful nonionic surfactants may be exemplified, but not limited to, polyoxyalkylene alkyl ethers, polyoxyalkylene sorbitan esters, polyoxyalkylene esters, polyoxyalkylene alkylphenyl ethers and others. The primary surfactants useful in the instant invention may be further exemplified by, but not limited to TERGITOL TMN-6, TERGITOL 15S40 and TERGITOL 15S7 produced by UNION CARBIDE CORPORATION, BRIJ 35 produced by ICI CHEMICALS and TRITON X405 produced by ROHM AND HAAS.

The secondary surfactant is selected from nonionic surfactants having an HLB value from 1.8 to 15, cationic surfactants and anionic surfactants and mixtures thereof. Useful nonionic surfactants may be exemplified, but not limited to, polyoxyalkylene alkyl ethers, polyoxyalkylene sorbitan esters, polyoxyalkylene esters, polyoxyalkylene alkylphenyl ethers and others. Useful nonionic secondary may be further exemplified by, but not limited to, BRIJ 30 produced by ICI CHEMICALS; and TERGITOL 15S5, TERGITOL

15S3 and TERGITOL TMN-3 produced by UNION CARBIDE CORPORATION.

Cationic and anionic surfactants known in the art as being useful in emulsification of polysiloxanes are also useful as the secondary surfactant in the instant invention. Suitable cationic surfactants include, but are not limited to, aliphatic fatty amines and their derivatives such as dodecylamine acetate, octadecylamine acetate and acetates of the amines of tallow fatty acids; homologues of aromatic amines having fatty chains such as dodecylanalin; fatty amides derived from aliphatic diamines such as undecylimidazoline; fatty amides derived from disubstituted amines such as oleylaminodiethylamine; derivatives of ethylene diamine; quaternary ammonium compounds such as tallow trimethyl ammonium chloride, dioctadecyldimethyl ammonium chloride, didodecyldimethyl ammonium chloride and dihexadecyldimethyl ammonium chloride; amide derivatives of amino alcohols such as beta-hydroxyethylsterarylamide; amine salts of long chain fatty acids; quaternary ammonium bases derived from fatty amides of di-substituted diamines such as oleylbenzylamino-ethylene diethylamine hydrochloride; quaternary ammonium bases of the benzimidazolines such as methylheptadecyl benzimidazol hydrobromide; basic compounds of pyridinium and its derivatives such as cetylpyridinium chloride; sulfonium compounds such as octadecylsulfonium methyl sulfate; quaternary ammonium compounds of betaine such as betaine compounds of diethylamino acetic acid and octadecylchloromethyl ether; urethanes of ethylene diamine such as the condensation products of stearic acid and diethylene triamine; polyethylene diamines; and polypropanolpolyethanol amines.

Cationic surfactants commercially available and useful in the instant invention include, but are not limited to ARQUAD T27W, ARQUAD 16-29, ARQUAD C-33, ARQUAD T50, ETHOQUAD T/13 ACETATE, all manufactured by AKZO CHEMIE.

Suitable anionic surfactants include, but are not limited to, sulfonic acids and their salt derivatives. The anionic surfactants useful in the instant invention can be exemplified by, but are not limited to alkali metal sulforicinates; sulfonated glyceryl esters of fatty acids such as sulfonated monoglycerides of coconut oil acids; salts of sulfonated monovalent alcohol esters such as sodium oleylisethionate; amides of amino sulfonic acids such as the sodium salt of oleyl methyl tauride; sulfonated products of fatty acids nitriles such as palmitonitrile sulfonate; sulfonated aromatic hydrocarbons such as sodium alphanaphthalene monosulfonate; condensation products of naphthalene sulfonic acids with formaldehyde; sodium octahydroanthracene sulfonate; alkali metal alkyl sulfates, ether sulfates having alkyl groups of 8 or more carbon atoms and alkylarylsulfonates having 1 or more alkyl groups of 8 or more carbon atoms.

The thick phase emulsions of this invention are typically comprised of at least 5 parts water per 100 parts of polysiloxane. The maximum amount of water is typically no more than 20 parts of water per 100 parts of polysiloxane, however, the maximum amount of water is dependent upon the polysiloxane being emulsified. One skilled in the art will readily be able to determine appropriate quantities of water which will result in a particle size that will produce a stable final emulsion. Further the thick phase emulsions are typically comprised of 1 to 15 parts primary surfactant per 100 parts of polysiloxane and 1 to 15 parts secondary surfactant per 100 parts of polysiloxane. The preferred thick phase emulsion composition comprises 5.5 to 12 parts water per 100 parts polysiloxane, 4 to 10 parts primary surfactant per 100 parts of polysiloxane and 4 to 10 parts secondary surfactant per 100 parts of polysiloxane.

The thick phase emulsion is diluted to the desired silicone content after an average particle size of less than 350 nanometers and more preferably less than 300 nanometers has been achieved to produce the final emulsion. Typically the thick phase emulsions are diluted to 1 to 60 percent silicone content and more typically to 10 to 50 percent silicone content.

Optional ingredients which may be added into the final emulsion include, but are not limited to, preservatives, fungicides, antioxidants, rust or corrosion inhibitors, additional surfactants and others.

The process for creating the thick phase emulsion comprises combining with shearing means a polysiloxane selected from high molecular weight polysiloxanes, bi-modal polysiloxane fluids, functional polysiloxanes and mixtures thereof; at least one primary surfactant; and water. The water may first be combined with the primary surfactant in such amounts that the primary surfactant is in a liquid state. It is preferred that the primary surfactant and water be dispersed into the polysiloxane at a temperature between 20° C. and 100° C. and more preferably between 40° C. and 100° C. After the primary surfactant and water have been dispersed into the polysiloxane, at least one secondary surfactant is added and dispersed into the polysiloxane using shear means. It is again preferred that the secondary surfactant be dispersed into the polysiloxane at a temperature between 20° C. and 100° C. and more preferably between 40° C. and 100° C. The resulting composition further is heated to or maintained at a temperature between 20° C. and 100° C. and preferably between 40° C. and 100° C. and mixed using shearing means for a sufficient period of time until the average particle size is less than 350 nanometers and more preferably less than 300 nanometers. The resulting thick phase emulsion is then diluted with additional water to the desired silicone content to form the final emulsion.

The final emulsions of this invention are characterized as being stable and oil-free. A stable emulsion may be further defined by no visible signs of creaming or free-oil in the emulsion after 1 month at room temperature. An oil-free emulsion may be further defined as one that does not have visible signs of unemulsified silicone oil after the processing is complete.

It is preferred that the processing, including all preliminary mixing, be carried out at temperatures of between 20°C. and 100°C. and more preferably at temperature of between 40°C. and 100°C. at atmospheric pressure. Heat can be applied to the system through the shear forces, electrical means, steam, hot oil, other heat means or any combination thereof. The temperature required during the processing may vary when pressures above or below atmospheric are used.

The components are mixed and emulsified using shearing means. Useful shearing means may be exemplified by but not limited to, single screw extruders, multiple screw extruders, change can mixers, planetary mixers, kettle mixers, static mixers, blend tanks, paddle mixers, butterfly mixers, sigma blade mixers, G-force mixers, mill type mixers, turbulizer mixers, finger mixers, porcupine mixers, helicone mixers and others. Any shear generating means which produced the necessary shear to form the thick phase emulsions can also be used in the process of this invention. The mixing and emulsification process can be carried out as a batch or continuous process depending on the shearing means used.

The amount of time it takes to produce a thick phase emulsion having an average particle size of less than 350 nanometers is dependent upon the amount of shear, the amount and type of secondary surfactant, the water concentration and the temperature of the components during the processing. Typically, thick phase emulsions with an average particle size of less than 350 nanometers can be achieved in less than 24 hours and more typically in less than 6 hours. It is important to shear the thick phase emulsion composition for a sufficient period of time until the average particle size is less than 350 nanometers and preferably less than 300 nanometers. Final emulsions produced having an average particle size of greater than 350 nanometers will not be stable to creaming and freeze thaw unless other materials, such as thickeners, are used to improve the stability.

At the lower water concentrations in the thick phase, over processing by high shear mixing or by higher temperatures sustained for long periods of time can cause the water to evaporate and thus give a thick phase emulsion with too large of an average particle size. Thus, when using lower water concentrations in the thick phase, operating conditions should be controlled or additional water should be added during the processing of the thick phase emulsions to make up for any that may evaporate.

So that those skilled in the art can understand and appreciate the invention taught herein, the following examples are presented, it being understood that these examples should not be used to limit the scope of this invention over the limitation found in the claims attached hereto.

The average particle size of the emulsions were measured using a Nicomp Submicron Particle Sizer Model 370 purchased from Pacific Scientific of Silver Spring, Md. The average particle size is reported as the "intensity weighted" value as determined by the principle of quasi-elastic light scattering and the cumulant method of D. E. Koppel {J. of Chem Phys., 57, 4814(1972)}. The term "parts" used herein refers to "parts by weight".

Example 1

88.5 parts of a 60,000 cSt polydimethylsiloxane fluid was charged to a clean Turello mixer with a double sweep action blade. The fluid was heated to approximately 60°C. by the shearing action of the mixer disperser blades. 4.3 parts of BRIJ-35 Surfactant, purchased from ICI CHEMICALS, having an HLB of 16.9, dissolved in 5.1 parts of water were added to the polysiloxane. After approximately 10 minutes of continued mixing, 5.1 parts of BRIJ-30 Surfactant, purchased from ICI Chemicals, having an HLB of 9.7, were added and the mixing was continued for approximately 4 hours total at approximately 60°C. The resulting average particle size was 289 nanometers and there was no visible signs of unemulsified polysiloxane. The thick phase emulsion was diluted to 50% silicone. The final emulsion has not creamed after three months at room temperature and also at 40°C. and is stable through five freeze/thaw cycles.

COMPARATIVE EXAMPLE 1A

84 parts of a 60,000 cSt polydimethylsiloxane fluid was charged to a clean Turello mixer with a double sweep action blade. The fluid was heated to approximately 60°C. by the shearing action of the mixer disperser blades. 4.2 parts of BRIJ-35 Surfactant, purchased from ICI CHEMICALS, having an HLB of 16.9, dissolved in 7.6 parts of water were added to the polysiloxane. After approximately 10 minutes of continued mixing, 4.2 parts of BRIJ-30 Surfactant, purchased from ICI Chemicals, having an HLB of 9.7, were added

and the mixing was continued for approximately 4 hours total at approximately 60° C. The resulting average particle size was 586 nanometers. The thick phase emulsion was diluted to 50% silicone. The final emulsion creamed at room temperature after one week and has only a one cycle freeze/thaw stability.

COMPARATIVE EXAMPLE 1B

82 parts of a 60,000 cSt polydimethylsiloxane fluid was charged to a clean Turello mixer. The fluid was heated to approximately 39° C. by the shearing action of the mixer disperser blades. 4 parts of BRIJ-35 dissolved in 10 parts of warm water were added. After approximately 10 minutes of continued mixing, 4 parts of BRIJ-30 were added and the mixing was continued for approximately 6 hours total at approximately 40° C. When the mixture was degassed under vacuum, the resulting product was a crystal clear, water dilutable, oil-free thick phase emulsion. After further dilution with water, this emulsion became white and had an average particle size of 430 nanometers. The diluted emulsion separated (produced visible oil) after several days.

Example 2

50 parts of a bi-modal polysiloxane fluid comprised of 13% of a hydroxy endblocked high molecular weight polydimethylsiloxane in a mixture mostly made up of octamethyltetracyclicsiloxane and decamethylpentacyclicsiloxane and was charged to a clean Turello mixer. The bi-modal polysiloxane fluid was heated to approximately 60° C. by a combination of steam in the mixer jacket and shearing action of the mixer disperser blades. 2.5 parts of BRIJ-35 dissolved in 6 parts of water was added and mixed until uniform (approximately 15 minutes). 3.5 parts of BRIJ-30 was added and mixing was continued for 4 hours at approximately 55° C. The mixture was cooled and diluted with 38 parts additional water. The final emulsion was oil-free and had an average particle size of 269 nanometers. After 4 months at room temperature, the final emulsion has not creamed.

Example 3

35 parts of a bi-modal polysiloxane fluid comprised of 13% of a hydroxy endblocked high molecular weight polydimethylsiloxane in a mixture mostly made up of octamethyltetracyclicsiloxane and decamethylpentacyclicsiloxane and was charged to a clean Turello mixer. The bi-modal polysiloxane fluid was heated to approximately 60° C. by the shearing action of the mixer disperser blades. 2.4 parts of BRIJ-35 dissolved in 4 parts of water was added and mixed until uniform (approximately 15 minutes). 2.4 parts of BRIJ-30 was added and mixing was continued for 3 hours at approximately 60° C. The mixture was cooled and diluted with 56.2 parts additional water. The final emulsion was oil-free and had an average particle size of 267 nanometers. After 4 months at room temperature, the final emulsion has not creamed.

COMPARATIVE EXAMPLE 3A

35 parts of a the same bi-modal polysiloxane fluid used in Example 3 was placed in a mix tank. 2.4 parts of BRIJ-35 and 2.4 parts of BRIJ-30 and 23 parts of water were added with shear from an electric stirrer. 23 parts of water was used because lower amounts of water would provide a mixture that was to thick to process through the Colloid Mill. The mixture was milled at 0.005 inch gap setting. The mixture was then diluted with additional water to obtain a 35% silicone level. The resulting product had an average particle size of 485 nanometers. The emulsion was stable for less than 3 days.

The same experiment was repeated except the mixture was heated to 60° C. before milling. The results were the same.

COMPARATIVE EXAMPLE 3B

The same mixture as used in Comparative Example 4A was used except that is was sheared in a Sonolator. After shearing, the mixture did not thicken. The emulsion was diluted to 35% silicone. It was stable at room temperature for less than 1 day.

Example 4

50 parts of a bi-modal polysiloxane fluid comprised of 13% of a hydroxy endblocked high molecular

weight polydimethylsiloxane; a mixture of dimethyl cyclic siloxanes; and 5 cSt polydimethylsiloxane fluid; was charged to a clean Turello mixer. The bi-modal polysiloxane fluid was heated to approximately 60° C. by a combination of steam in the mixer jacket and shearing action of the mixer disperser blades. 2.5 parts of BRIJ-35 dissolved in I part of water was added and mixed until uniform. 4 parts of additional water was added and mixed until uniform. 3.5 parts of BRIJ-30 was added and mixing was continued for 3 hours at approximately 64° C. The mixture was cooled and diluted with 39 parts additional water. The final emulsion was oil-free and had an average particle size of 222 nanometers. After 2 months at room temperature, the final emulsion has not creamed.

Example 5

50 parts of a hydroxy endblocked polytrifluoropropylmethylsiloxane fluid with a viscosity of approximately 50,000 cSt was charged to a clean Turello mixer. The siloxane fluid was heated to approximately 60° C. by the shearing action of the mixer disperser blades. 2.5 parts of BRIJ-35 dissolved in 1 part of water was added and followed immediately by 2.5 parts of additional water. After mixing until uniform, 3.5 parts of BRIJ-30 was added and mixing was continued for 3 hours at approximately 60° C. The mixture was cooled and diluted with 40.5 parts additional water. The final emulsion was oil-free and had an average particle size of 269 nanometers.

Example 6

35 parts of a bi-modal polysiloxane fluid comprised of 13% of a hydroxy endblocked high molecular weight polydimethylsiloxane in a mixture mostly made up of octamethyltetracyclicsiloxane and decamethylpentacyclicsiloxane and was charged to a clean Turello mixer. The bi-modal polysiloxane fluid was heated to approximately 60° C. by the shearing action of the mixer disperser blades. 2.2 parts of TERGITOL 15S7 purchased from Union Carbide Corp. having an HLB of 12.2 and 3.6 parts of water were added and mixed until uniform (approximately 15 minutes). 0.55 parts of ARQUAD T27W purchased from AKZO Chemie (a cationic surfactant) was added and mixing was continued for 3 hours at approximately 60° C. The mixture was cooled and diluted to 35% silicone. The final emulsion was oil-free and had an average particle size of 338 nanometers. After 4 months at room temperature, the final emulsion has not creamed.

**Claims**

**1.** A method for preparing polysiloxane emulsions comprising
(I) combining
(A) a polysiloxane selected from high viscosity polysiloxanes, bi-modal polysiloxane fluids and functional polysiloxanes and mixtures thereof;
(B) at least one primary surfactant selected from nonionic surfactants having an HLB value of 10 to 19; and
(C) water;
(II) adding to the mixture of (I)
(D) at least one secondary surfactant selected from nonionic surfactants having an HLB value of 1.8 to 15, cationic surfactants and anionic surfactants; and
(III) shearing the mixture of (II) at a temperature of between 20° C. and 100° C. until the average particle size of the polysiloxane is less than 350 nanometers.

**2.** The method as claimed in claim 1 wherein the polysiloxane is selected from high viscosity polysiloxanes having the formula:

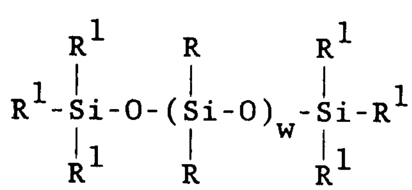

wherein each R is independently selected from the hydrogen atom, an alkyl group having at least 1

carbon atom and an aryl group having 6 to 10 carbon atoms, each $R^1$ is independently selected from R, hydroxy groups and alkoxy groups; and w has the value such that the viscosity is at least 1,000 centistoke.